# EUROPEAN PATENT SPECIFICATION

(11) **EP 1 156 568 B1**
(45) Date of publication and mention of the grant of the patent: **17.11.2010**
(21) Application number: 01660099.1
(22) Date of filing: 18.05.2001
(51) Int. Cl.: H02G 3/12, H02G 3/08

(54) **A junction box for electric cables and a method for manufacturing the same**
Elektrisches Kabelverbindungsgehäuse und Verfahren zu dessen Herstellung
Boîtier de raccordement de câbles électriques et procédé pour sa fabrication

(30) Priority: 19.05.2000 FI 20001202
(43) Date of publication of application: 21.11.2001
(73) Proprietor: ABB OY, 00380 Helsinki (FI)
(72) Inventor: Parviainen, Mauri, 10160 Degerby (FI); Keskinen, Esko, 06150 Porvoo (FI); Turunen, Jukka, 07700 Koskenkylä (FI); Kaukonen, Keijo, 06100 Porvoo (FI)
(74) Representative: LEITZINGER OY

(56) References cited:
- DE-C- 4 312 471
- US-A- 4 328 903

## Description

The invention relates to a junction box for electric cables for use in the electric cable installations of buildings as a wire connection box, which comprises four walls, a base integrally connected to them, and a cover for closing the open side of the box opposite the base, weakened areas in the walls for cable entries, and lugs which can be moved or turned between a fastening position protruding from the outer edge of the base and a storage position located within the outer edge of the base.

The invention also relates to a method for manufacturing a junction box for electric cables, in which method is, during the first injection moulding stage, made the base of the box with walls integrally connected to it of a hard plastic type, and during the second injection moulding stage are made the membrane walls covering the cable entries and a gasket remaining under the edge of the cover of a soft plastic type, using the box body made of the hard plastic type as a partial form face.

It is known to make fixed lugs on the outer edges of the base, with screws passing through the lugs for fixing the box to a wall. Alternatively, the box can be fixed by means of mounting holes located on the base of the box, in which case the protruding lugs are often left redundant and are not always desirable from the viewpoint of space utilisation. It is for this reason that some junction boxes have no protruding lugs.

US-A-4328903 shows a junction box according to the opening paragraph and preamble of claim 1. The fastening lugs protrude from the bottom plane of the box in their both positions, resulting to instable fixing and harmful increase of the box height.

The object of the invention is to provide a junction box of the above type, in which protruding lugs can be used if necessary, but which can, however, bemoved or turned to a storage position in which they will not protrude to a disturbing degree from the bottom edge or the bottom plane of the box.

This object is achieved by means of the junction box relating to the invention, which has the characteristics disclosed in the appended claim 1.

Another object of the invention is to provide a method for manufacturing this type of junction box in such a way that the lugs can be made without a separate work stage, by injection moulding them directly to their locations.

This object is achieved by means of the method relating to the invention, on the basis of the characteristics disclosed in the appended claim 5.

The lugs can, therefore, be made during the second injection moulding stage at the same time as the soft plastic parts, of the type of plastic which does not adhere to the plastic of the box body, by using the hard box body as a part of the mould. The product relating to the invention is not, however, limited to a junction box, the lugs of which are made according to this method, but the lugs can also be made separately and installed in place afterwards.

The dependent claims disclose preferred embodiments of the invention which do not limit the scope of protection of independent claims 1 and 5.

One embodiment of the invention is described in greater detail in the following, with reference to the appended drawings, in which:
- Figure 1: shows a perspective view from the bottom side of the base of the box relating to the invention with its walls, in so far as the box is made of hard plastic. This box is equipped with separately made lugs which fasten by means of a snap joint, the lugs being in a pulled-out position;
- Figure 1a: shows the lug shown in Figure 1 on a larger scale;
- Figure 2: shows a perspective view from the bottom side of the base of the box according to the invention with its walls, the openings and flow channels of which are cast over with soft plastic parts. This box is equipped with lugs injection moulded into place, one of which is in a pulled-out position (the lug is injection moulded in this position) and the other in a pushed-in position;
- Figure 2a: shows the lug shown in Figure 2 on a larger scale; and
- Figure 3: shows diagrammatically the stages of the method relating to the invention, whereby during the first injection moulding stage I (Figure 3a) are cast the hard plastic parts and during the second injection moulding stage II (Figure 3b) are cast the soft plastic parts. During injection moulding stage II, at the same time as the soft plastic parts are cast, can also be cast the lugs of the type of plastic which does not adhere to the plastic of the box body, by using the hard box body as a part of the mould.

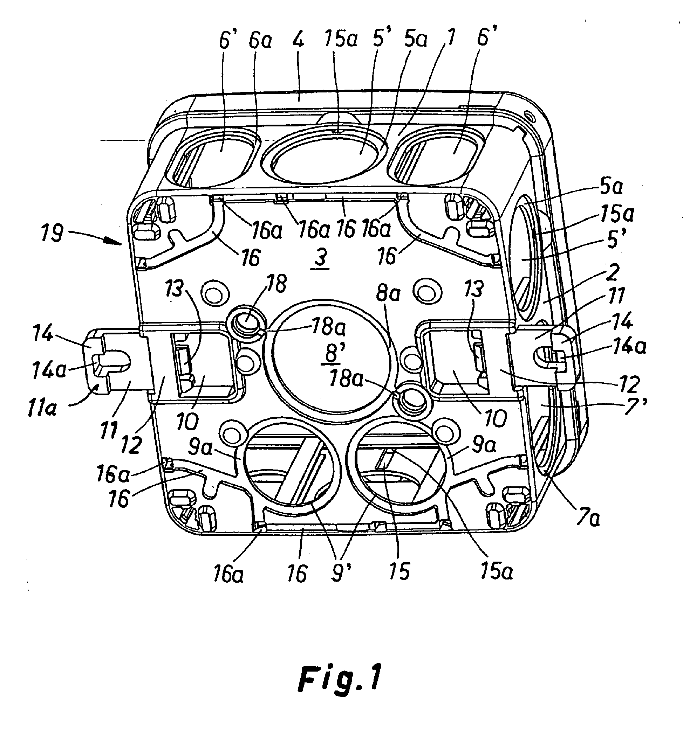

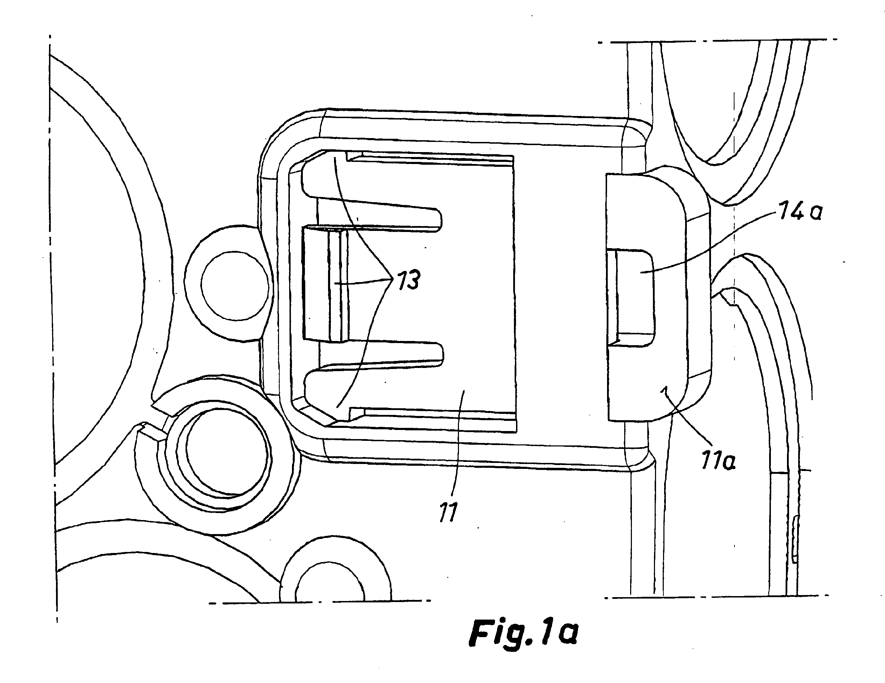

Figure 1 shows the base 3 of the junction box relating to the invention with its walls 1, 2, in so far as they are made of hard plastic. The open side of the box opposite the base 3 can be closed by means of the cover 4, only the edge of which is shown. The hard plastic part is marked in its entirety by reference numeral 19. In the walls 1, 2 of the box are cable entries. In the case shown, there are medium-sized circular openings 5', vertically elongated smaller openings 6' and horizontally elongated larger openings 7' in the walls. In the centre of the base 3 there is also a cable entry 8' and on the edge of the base are two smaller cable entries 9'. The openings 5' - 9' have narrow edge zones 5a-9a, the wall thickness of which is substantially smaller than the wall thickness of the walls 1, 2 and base 3 of the box.

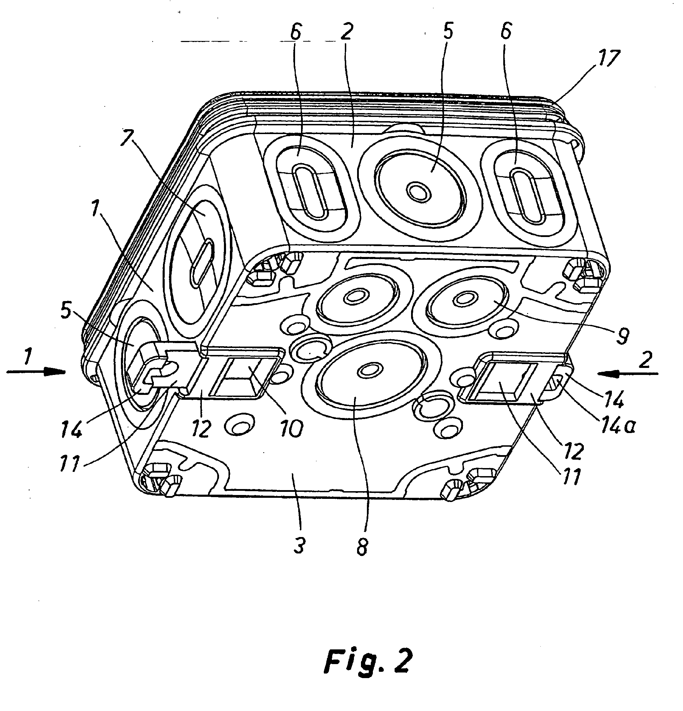

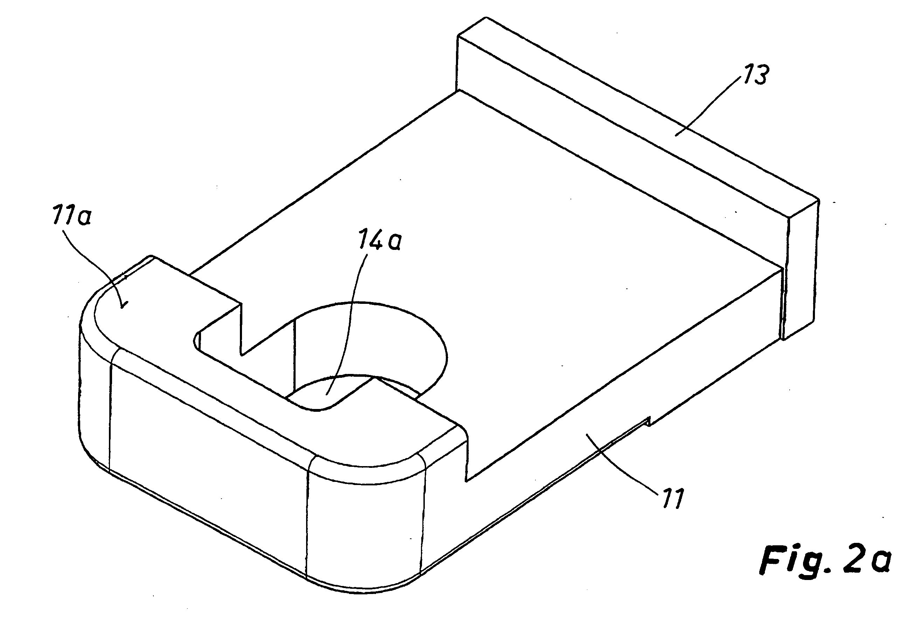

In the base of the box are embeddings 10 opening to the outer edges of the base, in which are located lugs 11, which can be moved between a fastening position protruding from the outer edge of the base, and a storage position located in the embedding 10. In Figure 1, the lugs 11 are shown in the protruding fastening position. The lugs shown in Figure 1 have been made separately. In Figure 2, one lug 11 is shown in the storage position, in which, however, the attachment head 14 protrudes sufficiently from the bottom edge of the box, so that, for example, the tip of a screwdriver can be used to engage in the opening 14a in the attachment head 14 for pulling the lug 11 into the fastening position. The lugs shown in Figure 2 have been moulded in place, as will be described in greater detail below.

Between the outer edges of the embedding 10 is a support neck 12, and the lug 11 is between the support neck 12 and the bottom of the embedding 10. At the back end of the lug 11 is a back stop 13, which, when it hits the support neck 12, prevents the lug 11 from being pulled completely out of the embedding 10. Figure 1a shows in greater detail the back stop 13 of a separately injection moulded lug 11, the said back stop being formed in multiple parts at the ends of bending branches separated by slots. The wedge surfaces incorporated in the back stops 13 together with the bending of the branches make it possible to push the lug 11 into the embedding 10. Alternatively, the lugs 11 can be made by injection moulding them into place in the embedding 10, as described in greater detail below. Figure 2a shows an embodiment of a lug 11 moulded into place, which comprises a rigid beam-like back stop 13. On the bottom side of the outer end of the lug 11 is a raised part, the surface 11a of which rests on the fastening base when the box is screwed to the base by its lugs 11. Reference numeral 14a denotes the screw hole in the lug 11 in both embodiments.

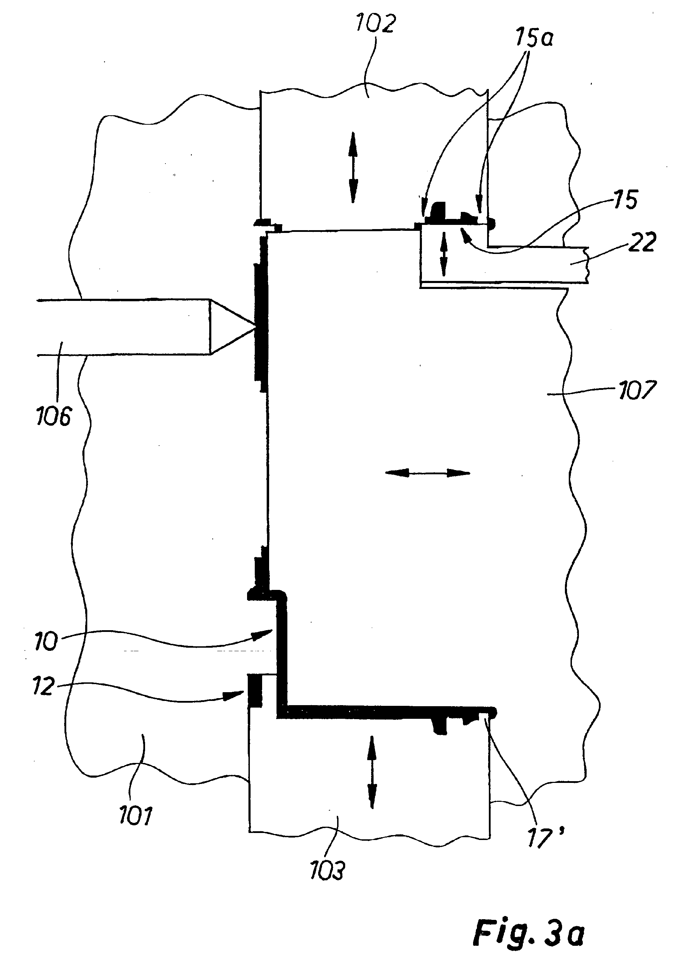

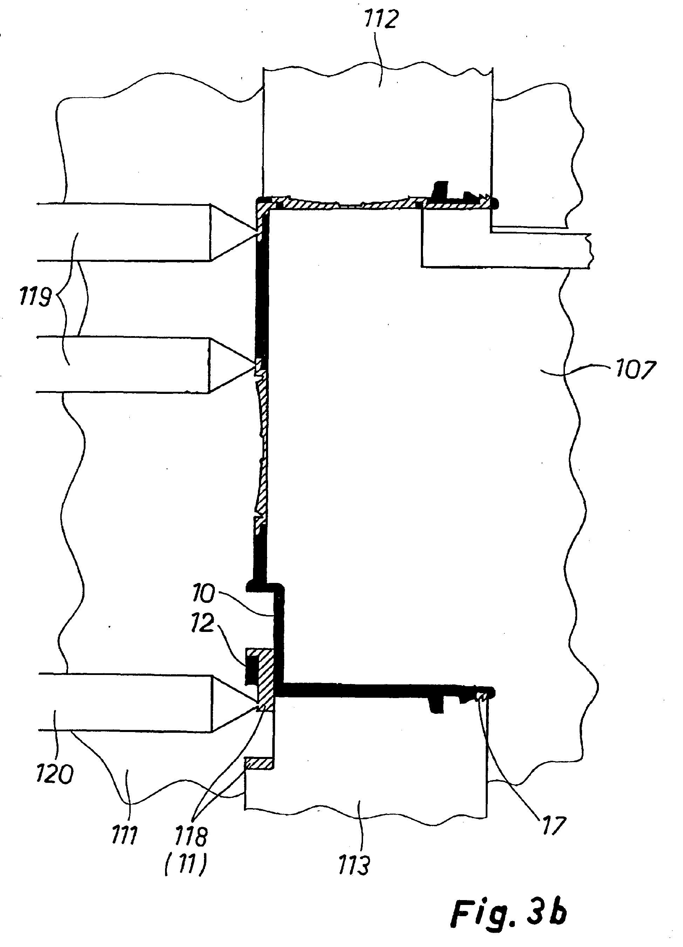

On the inner surfaces of the walls 1, 2 of the hard plastic part of the box are grooves 15 (can be seen through opening 9' in Figure 1 and in Figure 3a). At the ends of the grooves 15 are holes 15a which join the grooves 15 into flow communication, on the one hand, with the gasket canal 17' (in Figure 3a) remaining under the edge of the cover 4, and on the other hand with the thinned edges 5a, 6a, 7a of the cable entries 5', 6', 7' in the walls 1, 2. These flow grooves and the holes 15a at both of their ends are made during the first injection moulding stage I of the box, which is illustrated diagrammatically in Figure 3a.

The mould used during injection moulding stage I consists of a fixed mould half 101, which comprises movable side slides 102, 103 for making the shapes on the exterior of the sides of the box. There may be, for example, four side slides, that is, one per each side of the box. Hard plastic is injected through the fixed mould half along injection passages 106, from the injection cylinder (not shown) to the product itself. In the movable half of the mould is a prick 107 (also called a kernel) which forms the shape of the interior of the box, which prick has movable parts designated by reference numeral 22, these parts forming flow grooves 15, when the parts 22 are in their outermost position. The holes 15a at both ends of the flow grooves 15 are formed at the points where the side slides 102, 103 and the ends of the movable parts are pressed against each other when the mould closes. The shapes of the space which remains under the cable entries 5', 6', 7', the gasket groove 17' on the edge of the mouth, and the bridge 12 crossing the embedding 10 in the base are formed by means of the movable side slides 102, 103. At the beginning of injection moulding stage I, when the mould is closed, there is a space the shape of the hard box body 9 between the mould halves 101, 107, the side slides 102, 103, and the parts 22, which space is injected full of hard plastic.

The transfer stage between injection moulding stages I and II takes place as follows. The side slides 102, 103 open and the prick 107 in the movable mould half pulls the product out of the mould half 101. The box body 19 moulded from a hard plastic type is kept on top of the prick 107 throughout all the stages of injection moulding. During the transfer stage, the box body 19 moulded from a hard plastic type is moved from mould half 101 used in injection moulding stage I to the mould half 111 used in injection moulding stage II. Moving can take place by turning, shifting or otherwise moving the movable mould half. The parts 22 are at the same time pulled to a back position, whereby the space formed by them in the hard box body forms an injection passage 15 for the soft plastic. The pulled-back part 22 acts as a mould wall for the soft plastic during injection moulding stage II. The box body 19 on top of the prick 107 is brought to the other fixed mould half 111 which corresponds otherwise to mould half 101, but in it have been left spaces for soft plastic gaskets and canals, and for the lugs 11 in the pulled-out position. The side slides 112, 113 of the mould half 111 close. These side slides correspond otherwise to the side slides of mould half 101, but in them have been left spaces for the membrane gaskets 5, 6, 7 made for the wall openings 5', 6', 7', the gasket 17 on the outer edge of the mouth, and for the lugs 11 in the pulled-out position.

Through the fixed mould half 111 run two sets of injection passages 119 and 120. At injection moulding stage II, the soft plastic travels from a cylinder associated with the fixed mould half 111, along the injection passages 119, through several nozzles to the soft plastic spaces of the product and/or to the flow channels connected to these. At injection moulding stage I, grooves 16 have been made on the outer edge of the box base, which grooves are in flow communication also with the edges of the openings 5', 6', 7' via the passages 16a running through the bottom comers. The grooves may also turn on the outer surface of the piece around the comer to the edges of the openings 5', 6', 7'. In addition, the grooves 16 are connected with at least some of the edges 8a, 9a of the openings 8, 9 on the base of the box. The openings 18 of the fixing screws are also connected through flow channels 18a to the edge frame 8a of the central opening 8'. The sealing membrane of the fixing openings 18 which also acts to prevent the fixing screws from falling, is also made at injection moulding stage II.

The plastic of the lugs 11, which does not adhere to the plastic of the box body 19, travels from a second cylinder associated with the fixed mould half, along an injection passage 120, to the injection moulding spaces 118 of the lugs 11.

The hard plastic lugs 11 and the soft plastic membranes 5, 6, 7 closing the cable entries, as well as the gasket 17 are thus made during the same injection moulding stage II. In injecting the soft plastic parts and the lugs, the box body made of a hard plastic type is used as a partial form face.

The mould is opened by opening the side slides 112, 113 and the product is pulled out of the mould half 111 by means of the prick 107. If so desired, the lugs 11 can be pushed already at this stage into their storage position by means of a robot, or the like, and the product is detached from on top of the prick 107.

The lugs 11 do not necessarily have to be movable back and forth or made according to the manufacturing method described above. The lugs may also be separately made and/or fixed to the embedding on the bottom by means of a pivoted axle. Two lugs 11 are typically needed on opposite base edges, but there may also be a different number of lugs (sometimes even one suspension lug may suffice). If so desired, especially a turning lug can be located in all corners of the box. Lugs may also be located so that some are in the corners and some in the centre of the sides.

In the embodiment described above, the flow grooves 15 end just before the mouth of the box, whereby a small hard plastic neck remains between the end of the groove 15 and the edge of the mouth. This is desirable from the viewpoint of strength. Regarding tool construction, however, the use of space may become a limiting factor, especially with small boxes. By making the end of the groove 15 open to the edge of the mouth, the direction of movement of the part 22 can be turned to movement from the radial direction to the axial direction. Although the distance of the movement increases, this may reduce the space required by the movement mechanism in the prick 107. The edge of the box will then not be as rigid as in the embodiment described. The However, the box always functions together with the cover, which makes the edge of the mouth of the box rigid when installed into place.

## Claims

1. A junction box for electric cables for use in the electric cable installations of buildings as a wire connection box, which comprises four walls (1, 2), a base (3) integrally connected to them, and a cover (4) for closing the open side of the box opposite the base, weakened areas (5, 6, 7) in the walls for opening cable entries (5', 6', 7'), and lugs (11) which can be moved or turned between a fastening position protruding from the outer edge of the base, and a storage position located within the outer edge of the base, **characterised in that** in the base (3) of the box are embeddings (10) opening to the outer edges of the base, the lugs (11) being located in the said embeddings (10).

2. A junction box for electric cables as claimed in claim 1, **characterised in that** the lugs (11) have attachment heads (14) for pulling the lugs into the fastening position and that in the storage position of the lugs (11), their attachment heads (14) protrude from the bottom edge of the box.

3. A junction box for electric cables as claimed in claim 1 or 2, **characterised in that** between the outer edges of the embedding (10) is a support neck (12), that the lug (11) can be moved between the support neck (12) and the bottom of the embedding (10) back and forth between the fastening position and the storage position, and that at the back end of the lug (11) is a back stop (13), which prevents the lug (11) from being pulled completely out of the receiving embedding (10) when the back stop hits the support neck (12), and that at the outer end of the lug (11) is a raised support surface (11a) which rests on the base when the box is screwed to the base by its lugs.

4. A junction box for electric cables as claimed in any of the claims 1 to 3, **characterised in that** on the inner surfaces of the walls (1, 2) of the hard plastic part (19) of the box are grooves (15), at the ends of which are holes (15a) which join the grooves (15) into flow communication, on the one hand, with the gasket canal (17) and, on the other hand, with the edges (5a, 6a, 7a) of the cable entries (5', 6', 7') in the walls (1, 2).

5. A method for manufacturing a junction box for electric cables as claimed in any of the claims 1 to 4, in which method is, during the first injection moulding stage, made the base (3) of the box with the walls (1, 2) integrally connected to it of a hard plastic type, and during the second injection moulding stage, are made the membrane walls (5, 6, 7, 8, 9) covering the cable entries (5', 6', 7', 8', 9') and the gasket (17) remaining under the edge of the cover (4) of a soft plastic type, using the box body (19) made of the hard plastic type as a partial form face, **characterised in that** the lugs (11) are made during the second injection moulding stage of a third type of plastic which does not adhere to the said hard plastic type, the plastic of the lugs being injected into the embeddings (10) made during the first injection moulding stage in the vicinity of the outer edges of the base (3).

6. A method as claimed in claim 5, **characterised in that** during the first injection moulding stage, in the body part (19) of the box, which is made of the hard plastic type, are made grooves (15) and at their ends holes (15a), which join the grooves (15) into flow communication, on the one hand, with the gasket canal (17) remaining under the edge of the cover (4), and on the other hand with the edges (5a, 6a, 7a) of the cable entries (5', 6', 7') in the walls.

7. A method as claimed in claim 5 or 6, **characterised in that** during the first injection moulding stage, grooves (16) are made on the outer edge of the bottom of the hard plastic part (19) of the box, which grooves are in flow communication also with the lower edges of the cable entries (5', 6', 7') via the passages (16a) running through the bottom corners or around the corner, and of which grooves (16) at least some are in flow communication with the edges (8a, 9a) of the openings (8, 9) on the base.

8. A method as claimed in any of the claims 5 to 7, **characterised in that** during the second injection moulding stage is also made the sealing membrane for the fixing openings (18) on the base of the box, which membrane also acts to prevent the fixing screws from falling.

## Patentansprüche

1. Verteilungsdose für Stromkabel zum Gebrauch bei Elektrokabelinstallationen in Gebäuden als Drahtverbindungsgehäuse, das vier Wände (1, 2), eine einstückig damit verbundene Grundfläche (3) und eine Abdeckung (4) zum Schließen der offenen Seite des Gehäuses gegenüber der Grundfläche, geschwächte Bereiche (5, 6, 7) in den Wänden zum Öffnen von Kabeleingängen (5', 6', 7') und Passstücke (11) umfasst, die zwischen einer Befestigungsposition, die von der Außenkante der Grundfläche vorragt, und einer Einlagerungsposition, die sich innerhalb der Außenkante der Grundfläche befindet, verschiebbar oder drehbar sind, **dadurch gekennzeichnet, dass** in der Grundfläche (3) des Gehäuses Einbettungen (10) befinden, die sich zu den Außenkanten der Grundfläche hin öffnen, wobei sich die Passstücke (11) in den Einbettungen (10) befinden.

2. Verteilungsdose für Stromkabel nach Anspruch 1, **dadurch gekennzeichnet, dass** die Passstücke (11) Halterungsköpfe (14) zum Ziehen der Passstücke in die Befestigungsposition aufweisen, und dass in der Einlagerungsposition der Passstücke (11) ihre Halterungsköpfe (14) von der Unterkante des Gehäuses vorragen.

3. Verteilungsdose für Stromkabel nach einem der Ansprüche 1 oder 2, **dadurch gekennzeichnet, dass** sich zwischen den Außenkanten der Einbettung (10) eine Stützschulter (12) befindet, dass das Passstück (11) zwischen der Stützschulter (12) und dem Boden der Einbettung (10) zwischen der Befestigungsposition und der Einlagerungsposition vor und zurück verschiebbar ist, und dass sich am hinteren Ende des Passstücks (11) ein hinterer Anschlag (13) befindet, der verhindert, dass das Passstück (11) vollständig aus der aufnehmenden Einbettung (10) gezogen wird, wenn der hintere Anschlag an die Stützschulter (12) anschlägt, und dass sich am äußeren Ende des Passstücks (11) eine erhöhte Stützfläche (11a) befindet, die auf der Grundfläche ruht, wenn das Gehäuse durch ihre Passstücke an die Grundfläche geschraubt ist.

4. Verteilungsdose für Stromkabel nach einem der Ansprüche 1 bis 3, **dadurch gekennzeichnet, dass** sich auf den Innenflächen der Wände (1, 2) des Hartkunststoffteils (19) des Gehäuses Nute (15) befinden, an deren Enden Löcher (15a) sind, die die Nute (15) in Strömungsverbindung einerseits mit dem Dichtungskanal (17) und andererseits mit den Kanten (5a, 6a, 7a) der Kabeleingänge (5', 6', 7') in den Wänden (1, 2) verbinden.

5. Verfahren zum Fertigen einer Verteilungsdose für Stromkabel nach einem der Ansprüche 1 bis 4, wobei bei dem Verfahren während der ersten Spritzgießphase die Grundfläche (3) des Gehäuses mit den einstückig damit verbundenen Wänden (1, 2) aus einer Hartkunststoffart hergestellt wird, und während der zweiten Spritzgießphase die Membranwände (5, 6, 7, 8, 9), die die Kabeleingänge (5', 6', 7', 8', 9') abdecken, und die Dichtung (17), die unter der Kante der Abdeckung (4) verbleibt, aus einer Weichkunststoffart hergestellt werden, wobei der Gehäusekörper (19), der aus dem Hartkunststoff hergestellt ist, als Teilformfläche benutzt wird, **dadurch gekennzeichnet, dass** die Passstücke (11) während der zweiten Spritzgießphase aus einer dritten Kunststoffart hergestellt werden, die nicht an der Hartkunststoffart anhaftet, wobei der Kunststoff der Passstücke in die Einbettungen (10) eingespritzt wird, die während der ersten Spritzgießphase den Außenkanten der Grundfläche (3) benachbart hergestellt werden.

6. Verfahren nach Anspruch 5, **dadurch gekennzeichnet, dass** während der ersten Spritzgießphase in dem Körperteil (19) des Gehäuses, der aus der Hartkunststoffart hergestellt wird, Nute (15) und an ihren Enden Löcher (15a) hergestellt werden, die die Nute (15) in Strömungsverbindung einerseits mit dem Dichtungskanal (17), der unter der Kante der Abdeckung (4) verbleibt, und andererseits mit den Kanten (5a, 6a, 7a) der Kabeleingänge (5', 6', 7') in den Wänden verbinden.

7. Verfahren nach einem der Ansprüche 5 oder 6, **dadurch gekennzeichnet, dass** während der ersten Spritzgießphase Nute (16) an der Außenkante des Bodens des Hartkunststoffteils (19) des Gehäuses hergestellt werden, wobei die Nute über die Durchgänge (16a), die durch die Bodenecken oder um die Ecke verlaufen, ebenfalls in Strömungsverbindung mit den Unterkanten der Kabeleingänge (5', 6', 7') stehen, und wobei zumindest einige der Nute (16) in Strömungsverbindung mit den Kanten (8a, 9a) der Öffnungen (8, 9) in der Grundfläche stehen.

8. Verfahren nach einem der Ansprüche 5 bis 7, **dadurch gekennzeichnet, dass** während der zweiten Spritzgießphase außerdem die Abdichtungsmembran für die Befestigungsöffnungen (18) in der Grundfläche des Gehäuses hergestellt wird, wobei die Membran außerdem zum Verhindern wirkt, dass die Befestigungsschrauben herausfallen.

## Revendications

1. Boîtier de raccordement de câbles électriques à utiliser dans les installations de câbles électriques de bâtiments comme un boîtier de raccordements de fils, qui comprend quatre parois (1, 2), une base (3) rattachée en un seul tenant à celles-ci, et un couvercle (4) pour fermer le côté ouvert du boîtier opposé à la base, des zones d'affaiblissement (5, 6, 7) dans les parois pour ouvrir des entrées de câbles (5', 6 ', 7') et des languettes (11) qui peuvent être déplacées ou tournées entre une position de fixation dépassant du bord extérieur de la base, et une position de rangement située à l'intérieur du bord extérieur de la base, **caractérisé en ce que** la base (3) du boîtier sont des inclusions (10) s'ouvrant vers les bords extérieurs de la base, les languettes (11) étant situées dans lesdites inclusions (10).

2. Boîtier de raccordement de câbles électriques selon la revendication 1, **caractérisé en ce que** les languettes (11) possèdent des têtes de fixation (14) pour tirer les languettes en la position de fixation et **en ce que** dans la position de rangement des languettes (11), leurs têtes de fixation (14) dépassent du bord inférieur du boîtier.

3. Boîtier de raccordement de câbles électriques selon la revendication 1 ou 2, **caractérisé en ce que** entre les bords extérieurs de l'inclusion (10) se trouve un col de support (12), **en ce que** la languette (11) peut être déplacée entre le col de support (12) et la base de l'inclusion (10) en va et vient entre la position de fixation et la position de rangement, et **en ce que** au niveau de l'extrémité arrière de la languette (11) se trouve une butée arrière (13), qui empêche la languette (11) d'être tirée complètement à l'extérieur de l'inclusion (10) qui la reçoit quand la butée arrière cogne le col de support (12), et **en ce que** au niveau de l'extrémité extérieure de la languette (11) se trouve une surface de support surélevée (11a) qui repose sur la base quand le boîtier est vissé à la base par ses languettes.

4. Boîtier de raccordement de câbles électriques selon une quelconque des revendications 1 à 3, **caractérisé en ce que** sur les surfaces intérieures des parois (1, 2) de la partie en plastique dur (19) du boîtier se trouvent des rainures (15), aux extrémités desquelles se trouvent des trous (15a) qui joignent les rainures (15) en communication d'écoulement, d'une part, avec le canal de joint d'étanchéité (17) et, d'autre part, avec les bords (5a, 6a, 7a) des entrées de câbles (5', 6', 7') dans les parois (1, 2).

5. Procédé de fabrication d'un boîtier de raccordement de câbles électriques selon une quelconque des revendications 1 à 4, procédé dans lequel, pendant la première phase de moulage par injection de plastique, la base (3) du boîtier est réalisée avec les parois (1, 2) lui étant raccordées en un seul tenant d'un type de plastique dur, et pendant la second phase de moulage par injection, les parois à membrane (5, 6, 7, 8, 9) recouvrant les entrées de câble (5', 6', 7', 8', 9') et le joint d'étanchéité (17) restant sous le bord du couvercle (4) sont réalisées dans un type de plastique tendre, en utilisant le corps de boîtier (19) fabriqué dans le type de plastique dur comme une face de moule partiel, **caractérisé en ce que** les languettes (11) sont fabriquées pendant la seconde étape de moulage par injection d'un troisième type de plastique qui n'adhère pas audit type de plastique dur, le plastique des languettes étant injecté dans les inclusions (10) réalisées pendant la première étape de moulage par injection à proximité des bords extérieurs de la base (3).

6. Procédé selon la revendication 5, **caractérisé en ce que** pendant la première phase de moulage par injection, dans la partie de corps (19) du boîtier, qui est fabriquées dans le type de plastique dur, des rainures (15) sont réalisées et des trous (15a) sont réalisés à leurs extrémités, qui joignent les rainures (15) en communication d'écoulement, d'une part,avec le canal de joint d'étanchéité (17) restant sous le bord du couvercle (4), et d'autre part avec les bords (6a, 6a, 7a) des entrées de câble (5', 6', 7') dans les parois.

7. Procédé selon la revendication 5 ou 6, **caractérisé en ce que** pendant la première étape de moulage par injection, des rainures (16) sont réalisées sur le bord extérieur de la base de la partie en plastique dur (19) du boîtier, lesquelles rainures sont en communication d'écoulement également avec les bords inférieurs des entrées de câbles (5', 6', 7') via les passages (16a) passant à travers les coins inférieurs ou autour du coin, et au moins certaines desdites rainures (16) sont en communication d'écoulement avec les bords (8a, 9a) des ouvertures (8, 9) sur la base.

8. Procédé selon une quelconque des revendications 5 à 7, **caractérisé en ce que** pendant la seconde étape de moulage par injection, la membrane de scellement est aussi réalisée pour les ouvertures de fixation (18) sur la base du boîtier, laquelle membrane agit aussi afin d'empêcher la chute des vis de fixation.
